# EUROPÄISCHE PATENTANMELDUNG

(11) **EP 2 806 056 A1**
(43) Veröffentlichungstag der Anmeldung: **26.11.2014**
(21) Anmeldenummer: 14000734.5
(22) Anmeldetag: 01.03.2014
(51) Int. Cl.: D01H 4/12, F16J 15/16, F16J 15/32, F16J 15/34

(54) **Offenend-Spinnvorrichtung und Dichtungselement für eine Offenend-Rotorspinnvorrichtung**

(30) Priorität: 12.04.2013 DE 102013006357
(71) Anmelder: Saurer Germany GmbH & Co. KG, 42897 Remscheid (DE)
(72) Erfinder: Wassenhoven, Heinz-Georg, 41065 Mönchengladbach (DE)
(74) Vertreter: Hamann, Arndt

(57) **Zusammenfassung**

Die Erfindung betrifft eine Offenend-Spinnvorrichtung (3) mit einem Spinnrotor (4), der während des Spinnbetriebes mit hoher Drehzahl in einem mit Unterdruck beaufschlagten Rotorgehäuse (6) umläuft, an das ein Lagergehäuse (8) angeschlossen ist, welches eine Spinnrotorlagerung (5) aufweist, wobei die Spinnrotorlagerung über geschmierte, vordere und hintere Wälzlagereinrichtungen (5A, 5B) verfügt, in denen der Spinnrotor (4) rotierbar gelagert ist und die Wälzlagereinrichtungen nach außen durch Spaltdichtungsanordnungen (41) abgedeckt sind, die im dynamischen Lagerzustand die Wälzlagereinrichtungen (5A 5B) abdichten.

Erfindungsgemäß ist vorgesehen, dass wenigstens im Bereich der Spaltdichtungsanordnung (41) der hinteren Wälzlagereinrichtung (5B) ein zusätzliches, elastisches Dichtungselement (42A, 42B) angeordnet ist, das im statischen Lagerzustand mit einer zugehörigen Dichtfläche (46, 48) korrespondiert und dadurch sicherstellt, dass die Wälzlagereinrichtungen (5A, 5B) auch im statischen Lagerzustand des Spinnrotors (4) gegenüber der Umgebungsatmosphäre abgedichtet sind.

## Beschreibung

Die Erfindung betrifft eine Offenend-Spinnvorrichtung gemäß dem Oberbegriff des Anspruches 1 sowie ein Dichtungselement gemäß Anspruch 8.

Bezüglich der Lagerung von Spinnrotoren in Offenend-Spinnvorrichtungen von Offenend-Rotorspinnmaschinen sind zahlreiche, zum Teil recht unterschiedliche Ausführungsformen bekannt und in der Patentliteratur zum Teil recht ausführlich beschrieben.

Es sind beispielsweise sowohl Offenend-Spinnvorrichtungen Stand der Technik, bei denen der Spinnrotor mittels einer Magnetlagereinrichtung oder eines Pneumatiklagers berührungslos gelagert ist, als auch Offenend-Spinnvorrichtungen bekannt, bei denen der Spinnrotor in einer Lagereinrichtung mechanisch abgestützt ist.

Bezüglich mechanischer Spinnrotor-Lagereinrichtungen sind beispielsweise so genannte Stützscheibenlagerungen weit verbreitet, bei denen der Spinnrotor mit seinem Rotorschaft in den Lagerzwickeln zweier rotierbar gelagerter Stützscheibenpaare abgestützt ist, die ihrerseits rotierbar gelagert sind. Der Rotorschaft wird außerdem von einem maschinenlangen, umlaufenden Tangentialriemen angetrieben, der den Rotorschaft zwischen den Lagerzwickeln beaufschlagt. Derartige Stützscheibenlagerungen ermöglichen während des Spinnbetriebes eine relativ hohe Rotordrehzahl und haben sich in der Praxis bei Hochleistungs-Spinnmaschinen hervorragend bewährt. Allerdings sind Stützscheibenlagerungen in ihrem konstruktiven Aufbau etwas aufwendig und entsprechend kostenintensiv.

Im Zusammenhang mit "Low-cost"- Offenend-Spinnmaschinen, deren Spinnrotoren mit deutlich niedrigeren Drehzahlen rotieren, ist es des Weiteren seit langem bekannt, die Spinnrotoren der Offenend-Spinnvorrichtungen mit ihrem Rotorschaft in Wälzlagereinrichtungen direkt zu lagern.

Solche beispielsweise in der DE 38 09 976 A1, der DE 38 19 607 A1, der DE 41 04 453 A1 oder der DE 10 2004 019 530 A1 beschriebenen Wälzlagereinrichtungen weisen in der Regel ein buchsenartiges, stählernes Lagergehäuse auf, in das beabstandet zwei Außenlaufbahnen für zugehörige Wälzlagerkörper eingearbeitet sind, wobei das Lagergehäuse wenigstens im Bereich der Laufbahnen gehärtet ist.

Die zugehörigen Wälzlagerkörper, beispielsweise gehärtete Stahlkugeln, stützen sich im Montagezustand außerdem in gegenüberliegenden Innenlaufbahnen einer stählernen Welle ab, die einen Rotorschaft bildet. Die Wälzlagerkörper sind ihrerseits in so genannten Käfigen rotierbar gehaltert sowie durch ein Schmiermittel, beispielsweise Schmierfett oder Öl, geschmiert.
Auch die Welle ist wenigstens im Bereich der Innenlaufbahnen gehärtet und endseitig mit einem so genannten Antriebswirtel ausgestattet, der von einem maschinenlangen Antriebsriemen beaufschlagt wird.
Auf der dem Antriebswirtel gegenüberliegenden Seite der als Rotorschaft ausgebildeten Welle ist eine Rotortasse festgelegt, die während des Spinnbetriebs in einem Rotorgehäuse umläuft, das während des Spinnprozesses mittels eines schwenkbar gelagerten Deckelelementes verschlossen ist. Das Rotorgehäuse steht mit einer Unterdruckquelle in Verbindung, die den während des Spinnbetriebes im Rotorgehäuse notwendigen Unterdruck erzeugt und aufrechterhält. Das heißt, der mittels des Antriebsriemens rotierbare Rotorschaft reicht durch eine entsprechende Eintrittsöffnung in das unterdruckbeaufschlagte Rotorgehäuse.

Derartige Wälzlagereinrichtungen sind außerdem nach außen jeweils durch beispielsweise labyrinthartige Spaltdichtungsvorrichtungen abgedeckt, die dafür sorgen, dass das Schmiermittel im Bereich der Wälzkugellaufbahnen gehalten wird sowie verhindern sollen, dass Schmutz in die Wälzlagereinrichtungen eindringen kann.

Die bei derartig ausgebildeten Offenend-Spinnvorrichtungen im Bereich der Eintrittsöffnung in das unterdruckbeaufschlagte Rotorgehäuse einströmende Falschluft führt allerdings unvermeidlich zu unerwünschten Druckverlusten im Bereich des Rotorgehäuses. Um diese unerwünschten Druckverluste, die den Energieverbrauch der Textilmaschine nicht unerheblich negativ beeinflussen, zu minimieren, ist deshalb bereits vorgeschlagen worden, das Lagergehäuse für die Wälzlagereinrichtungen direkt an das unterdruckbeaufschlagbare Rotorgehäuse anzuschließen und damit die Falschluftzufuhr zu unterbinden.

Offenend-Spinnvorrichtungen, bei denen das Lagergehäuse für Wälzlagereinrichtungen direkt an das unterdruckbeaufschlagbare Rotorgehäuse angeschlossen ist bzw. bei denen das Lagergehäuse für Wälzlagereinrichtungen und das unterdruckbeaufschlagbare Rotorgehäuse eine Baueinheit bilden, sind zum Beispiel in der DE 10 2007 063 264 A1, der DE 26 47 816 A oder der DE 199 01 565 A1 beschrieben.

Offenend-Spinnvorrichtungen mit derartigen, relativ kostengünstigen Wälzlagereinrichtungen haben sich im Zusammenhang mit Offenend-Rotorspinnmaschinen mit begrenzter Rotordrehzahl durchaus bewährt, weisen allerdings den Nachteil auf, dass die im Bereich des Lagergehäuses angeordneten Spaltdichtungsvorrichtungen nur bei dynamischen Lagerzuständen des Spinnrotors ordnungsgemäß funktionieren. Die eingesetzten Spaltdichtungsvorrichtungen, die oft als Labyrinthdichtungen ausgebildet sind, stellen berührungsfreie Wellendichtungen dar, deren Dichtwirkung auf strömungstechnischen Effekten beruht, die nur bei rotierendem Spinnrotorschaft gegeben sind. Das heißt, während des Betriebes wird der Spalt solcher Spaltdichtungsvorrichtungen durch Zentrifugalkräfte und Luftwirbel dicht. Bei statischen Lagerzuständen des Spinnrotors ist der Spalt solcher Spaltdichtungsvorrichtungen allerdings luftdurchlässig.

Bei bestimmten Betriebszuständen, bei denen der Rotorschaft noch nicht rotiert, das Rotorgehäuse aber dennoch bereits mit Unterdruck beaufschlagt ist, wie dies zum Beispiel bei einem Fadenbruch oder auch beim so genannten Massenanspinnen einer Offenend-Spinnmaschine gegeben ist, besteht bei diesen bekannten Einrichtungen daher stets die Gefahr, dass aufgrund des Unterdruckes im Rotorgehäuse durch die Spaltdichtungsvorrichtungen hindurch von außen Schmutzpartikel und/oder Fasermaterial in die Wälzlagereinrichtungen eingesaugt werden und sich dieses Material im Bereich der Wälzlagereinrichtungen ablagert.
Solche Ablagerungen führen mit der Zeit zu großen Funktionsproblemen an den verschmutzten Wälzlagereinrichtungen bis zum Totalausfall der betroffenen Offenend-Spinnvorrichtungen.

Ausgehend von Offenend-Spinnvorrichtungen der vorstehend beschriebenen Gattung liegt der Erfindung die Aufgabe zugrunde, Offenend-Spinnvorrichtungen, die jeweils ein unterdruckbeaufschlagbares Rotorgehäuse mit einem angeschlossenen Lagergehäuse für Wälzlagereinrichtungen aufweisen, dahingehend zu verbessern, dass bei allen Lagerzuständen eine ausreichende Abdichtung der Wälzlagereinrichtungen des Lagergehäuses gegenüber der Umgebungsatmosphäre gewährleistet ist.

Die Aufgabe wird erfindungsgemäß durch eine Offenend-Spinnvorrichtung, die die kennzeichnenden Merkmale des Anspruches 1 aufweist, bzw. durch ein Dichtungselement gemäß Anspruch 8 gelöst.

Die erfindungsgemäße Ausbildung, bei der die im Bereich der hinteren Wälzlagereinrichtung angeordnete Spaltdichtungsanordnung ein zusätzliches, elastisches Dichtungselement aufweist, das im statischen Lagerzustand mit einer zugehörigen Dichtfläche korrespondiert und dadurch sicherstellt, dass die Wälzlagereinrichtungen auch bei einem solchen Lagerzustand zuverlässig gegenüber der Umgebungsatmosphäre abgedichtet sind, hat den Vorteil, dass die Wälzlagereinrichtungen des Lagergehäuses jetzt bei allen Lagerzuständen ausreichend sicher gegenüber dem Eindringen von Schmutzpartikeln geschützt sind.

Die Spaltdichtungsanordnung, deren Dichtspalte bekanntlich im statischen Lagerzustand des Spinnrotors durchlässig sind, ermöglicht es, dass bei Betriebszuständen, bei denen der Rotorschaft trotz im Rotorgehäuse anstehenden Unterdruckes nicht rotiert, Unterdruck bis zum elastischen Dichtungselement vordringen und dafür sorgen kann, dass das elastische Dichtungselement an eine zugehörige Dichtfläche angesaugt wird. Das dann anliegende Dichtungselement wirkt dann als Dichtung bei statischem Lagerzustand des Spinnrotors.

Bei dynamischen Lagerzuständen des Spinnrotors sorgen hingegen strömungstechnische Effekte im Bereich der Spaltdichtungsanordnung dafür, dass der Unterdruck nicht mehr bis zum Dichtungselement vorbringen kann und das zusätzliche elastische Dichtungselement von seiner Dichtfläche abgehoben wird und nicht durch Reibung vorzeitig verschleißen kann. Das bedeutet, bei der erfindungsgemäßen Ausbildung der Offenend-Spinnvorrichtung können auch bei einem unterdruckbeaufschlagten Rotorgehäuse bei keinem Lagerzustand mehr Verunreinigungen in die Wälzlagereinrichtungen eindringen, was sich sehr positiv sowohl auf die Zuverlässigkeit als auch auf die Lebensdauer der Wälzlagereinrichtungen auswirkt.
Ein solches zusätzliches elastisches Dichtungselement ist relativ problemlos und kostengünstig zu realisieren und stellt ein zuverlässig arbeitendes, unkompliziertes Bauteil dar, durch das die Arbeits- bzw. Wirkungsweise der an sich bekannten Spaltdichtungseinrichtungen entscheidend ausgeweitet und damit verbessert werden kann.

Wie im Anspruch 2 dargelegt, ist in vorteilhafter Ausführungsform vorgesehen, dass das zusätzliche elastische Dichtungselement an einer äußeren Abdeckscheibe der Spaltdichtungsanordnung angeordnet ist.
Vorzugsweise ist das elastische Dichtungselement dabei entweder, wie im Anspruch 3 beschrieben, an die äußere Abdeckscheibe der Spaltdichtungsanordnung angeklebt oder, wie im Anspruch 4 dargelegt, an die äußere Abdeckscheibe der Spaltdichtungsanordnung anvulkanisiert.
Beide Verfahrensweisen sind sehr vorteilhaft, wobei das Ankleben etwas kostengünstiger, aufgrund der heutigen, modernen Klebstoffe aber dennoch ausreichend zuverlässig ist.

Gemäß Anspruch 5 weist das zusätzliche elastische Dichtungselement in vorteilhafter Ausführungsform eine Dichtlippe auf, die im statischen Lagerzustand mit einer Dichtfläche am Rotorschaft korrespondiert. Da das elastische Dichtungselement bei dynamischen Lagerzuständen aufgrund strömungstechnischer Effekte von der Dichtfläche am Rotorschaft abgehoben wird, ist durch eine solche Ausbildung auf relativ einfache Weise eine gute und langlebige Abdichtung zu realisieren, die sich außerdem durch eine sehr kompakte Bauweise auszeichnet.

Anstelle der in den vorstehenden Ansprüchen beschriebenen Ausführungsform kann allerdings auch eine Ausführungsform zum Einsatz kommen, die, wie im Anspruch 6 beschrieben, ein zusätzliches elastisches Dichtungselement aufweist, das als am Rotorschaft festlegbares Bauteil ausgebildet ist. Dieses am Rotorschaft festlegbare Bauteil korrespondiert im statischen Lagerzustand mit einer Dichtfläche an der äußeren Abdeckscheibe der Spaltdichtungsanordnung.

Ein solches am Rotorschaft festlegbares zusätzliches elastisches Dichtungselement, das bei dynamischen Lagerzuständen ebenfalls von seiner zugehörigen Dichtfläche abgehoben ist, weist den Vorteil auf, dass es im Bedarfsfall leicht nachgerüstet werden kann. Das bedeutet, auch bereits ausgelieferte Offenend-Spinnvorrichtungen können im Bedarfsfall verhältnismäßig problemlos mit der erfindungsgemäßen, sehr vorteilhaften Einrichtung nachgerüstet werden.

Gemäß Anspruch 7 ist in vorteilhafter Ausführungsform vorgesehen, dass die Spaltdichtungsanordnungen im Lagergehäuse als Labyrinthdichtungen ausgebildet sind. Solche als Labyrinthdichtungen ausgebildeten Spaltdichtungsanordnungen stellen kostengünstige Bauteile dar, die sich sowohl im Textilmaschinenbau als auch im allgemeinen Maschinenbau bereits bestens bewährt haben.

Wie im Anspruch 8 beschrieben, besteht das Dichtungselement aus einem Befestigungsabschnitt und einem elastischen Dichtungsabschnitt, der mittels des Unterdruckes im Rotorgehäuse im statischen Lagerzustand des Spinnrotors gegen eine korrespondierende Dichtfläche anlegbar ist. Das heißt, das Dichtungselement ist so ausgebildet, dass sichergestellt ist, dass im statischen Lagerzustand des Spinnrotors die Wälzlagereinrichtungen zuverlässig gegenüber der Umgebungsatmosphäre abgedichtet sind.

Wie vorstehend bereits im Zusammenhang mit dem Anspruch 1 erläutert, hat der Einsatz eines solchen elastischen Dichtungselements insbesondere den Vorteil, dass die Wälzlagereinrichtungen bei allen Betriebsbedingungen, das heißt, auch bei statischem Lagerzustand des Spinnrotors, zuverlässig gegenüber der Umgebungsatmosphäre abgedichtet sind.
Bei Verwendung eines erfindungsgemäßen elastischen Dichtungselements können auch bei stehendem Rotorschaft und gleichzeitig mit Unterdruck beaufschlagtem Rotorgehäuse keine Verunreinigungen mehr in die Wälzlagereinrichtungen des Lagergehäuses eindringen.
Wie in den Ansprüchen 9 bzw. 10 beschrieben, ist das elastische Dichtungselement an einer äußeren Abdeckscheibe der beilspielsweise als Labyrinthdichtung ausgebildeten Spaltdichtungsanordnung befestigt und weist eine Dichtlippe auf, die im statischen Lagerzustand mit einer Dichtfläche am Rotorschaft korrespondiert.

Ein solches elastisches Dichtungselement, das eine Dichtlippe aufweist, ist relativ problemlos und kostengünstig zu realisieren und stellt ein zuverlässig arbeitendes, unkompliziertes Bauteil dar, durch das die Arbeitsweise bekannter Dichtungseinrichtungen von Wälzlagereinrichtungen entscheidend ausgeweitet und damit verbessert werden kann. In vorteilhafter Ausführungsform korrespondiert die Dichtlippe nur im statischen Lagerzustand des Spinnrotors mit einer Dichtfläche am Rotorschaft und stellt somit eine verschleißarme, zusätzliche Abdichtung dar. Das elastische Dichtungselement zeichnet sich außerdem durch eine sehr kompakte Bauweise aus.

In alternativer, im Anspruch 11 beschriebener Ausführungsform, ist das Dichtungselement als am Rotorschaft befestigtes, elastisches Bauteil ausgebildet, das im statischen Lagerzustand des Spinnrotors mit einer Dichtfläche an der Abdeckscheibe der Spaltdichtungsanordnung korrespondiert.
Ein solches am Rotorschaft festlegbares elastisches Dichtungselement weist insbesondere den Vorteil auf, dass es leicht nachgerüstet werden kann. Das heißt, bei Bedarf können leicht auch bereits ausgelieferte Offenend-Spinnvorrichtungen nachträglich und verhältnismäßig problemlos mit einem erfindungsgemäßen, sehr vorteilhaften elastischen Dichtungselement nachgerüstet werden.

Die Erfindung wird nachfolgend anhand von in den Zeichnungen dargestellten Ausführungsbeispielen näher erläutert.

Es zeigt:
- Fig. 1: in Seitenansicht eine Arbeitsstelle einer Offenend-Rotorspinnmaschine, deren Offenend-Spinnvorrichtung mit einem erfindungsgemäßen, zusätzlichen Dichtungselement ausgestattet ist,
- Fig. 2: in Schnittdarstellung den Stand der Technik, wie er im Zusammenhang mit Offenend-Spinnvorrichtungen bekannt ist, deren Spinnrotor in Wälzlagereinrichtungen gelagert ist, wobei das Lagergehäuse dieser Wälzlagereinrichtungen an ein unterdruckbeaufschlagbares Rotorgehäuse angeschlossen ist,
- Fig. 2A: die Einzelheit X der Fig.2 in einem größeren Maßstab,
- Fig. 3: eine Spaltdichtungsanordnung einer Wälzlagereinrichtung, mit einer ersten Ausführungsform eines erfindungsgemäßen elastischen Dichtungselements,
- Fig. 4: eine Spaltdichtungsanordnung einer Wälzlagereinrichtung, mit einer zweiten Ausführungsform eines erfindungsgemäßen elastischen Dichtungselements.

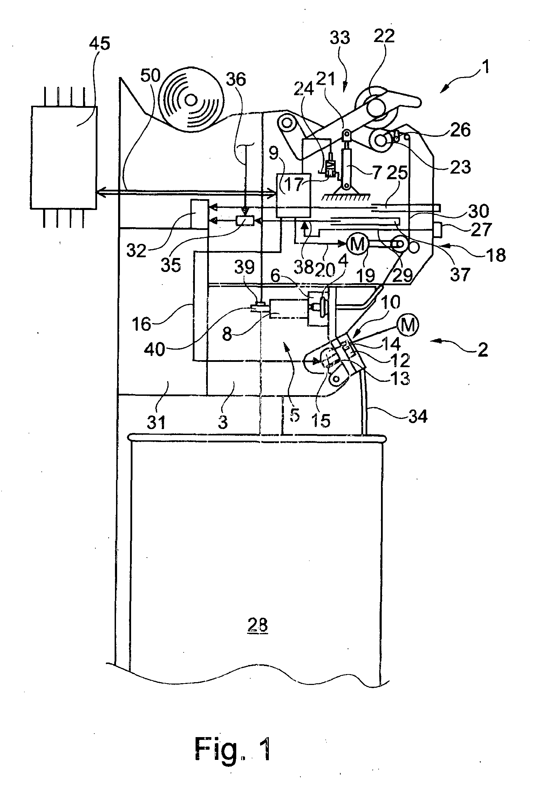

In Fig. 1 ist eine schematische Seitenansicht einer Arbeitsstelle einer Offenend-Rotorspinnmaschine 1 dargestellt. Derartige Offenend-Rotorspinnmaschinen 1 weisen, wie bekannt, eine Vielzahl solcher identischer Arbeitsstellen 2 auf, die jeweils mit einer Offenend-Spinnvorrichtung 3 sowie einer Spuleinrichtung 33 ausgestattet sind.

In der Spinnvorrichtung 3 wird ein in einer Spinnkanne 28 vorgelegtes Faserband 34 zu einem Faden 30 versponnen, der anschließend auf der Spuleinrichtung 33 zu einer Kreuzspule 22 aufgewickelt wird.

Die Spuleinrichtungen 33 weisen dabei, wie üblich, jeweils einen Spulenrahmen 21 zum drehbaren Haltern der Hülse einer Kreuzspule 22, eine Spulenantriebswalze 23 sowie eine Fadenchangiereinrichtung 26 auf.

Im dargestellten Ausführungsbeispiel verfügt die Spuleinrichtung 33 außerdem über eine Hebeeinrichtung 7 zum Abheben der Kreuzspule 22 von der Spulenantriebswalze 23. Diese Hebeeinrichtung 7 ist beispielsweise als Schubkolbengetriebe ausgebildet, das über eine Pneumatikleitung 24, in die ein Elektromagnetventil 17 eingeschaltet ist, an eine (nicht dargestellte) Überdruckquelle angeschlossen ist.
Im vorliegenden Ausführungsbeispiel erfolgt der Antrieb der Spulenantriebswalze 23 als Gruppenantrieb. Das heißt, es ist eine maschinenlange Antriebswelle vorgesehen, an der die einzelnen Spulenantriebswalzen 23 festgelegt sind.
Jede der Spinnvorrichtungen 3 verfügt des Weiteren über einen Spinnrotor 4, der während des Spinnbetriebes mit hoher Drehzahl in einem unterdruckbeaufschlagten Rotorgehäuse 6 rotiert sowie über eine Faserband-Auflöseeinrichtung 10 mit einer Faserband-Auflkösewalze 12 und einem Faserband-Einzugszylinder 14.

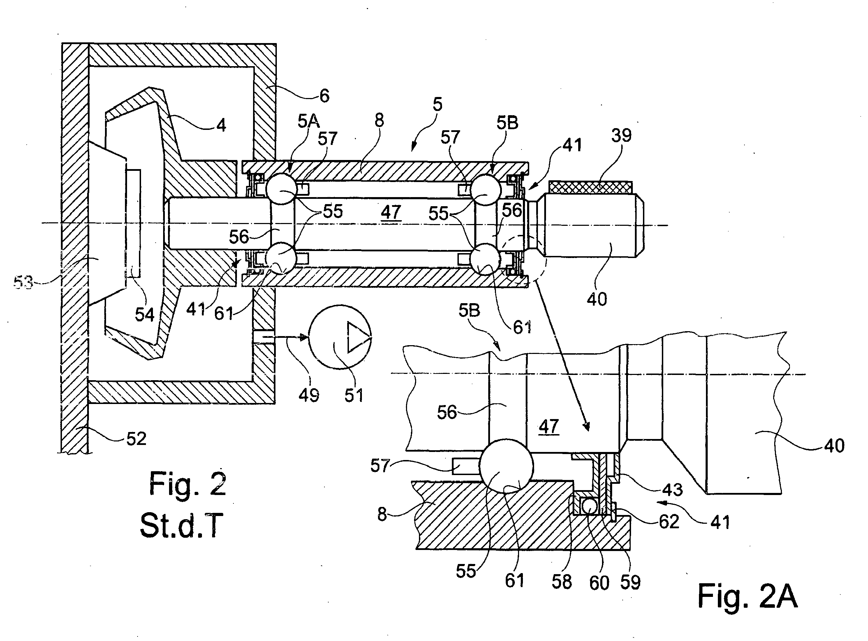

Der Spinnrotor 4 ist dabei in einer Wälzlagereinrichtung 5 gelagert, deren Lagergehäuse 8 direkt an das Rotorgehäuse 6 angeschlossen ist bzw. mit dem Rotorgehäuse eine Baueinheit bildet.
Wie in Fig.1 dargestellt, wird der Spinnrotor 4 über einen maschinenlangen Tangentialriemen 39 angetrieben, der einen (in Fig.1 nicht dargestellten) Antriebswirtel 40 beaufschlagt. Die Wälzlagereinrichtung 5 sowie deren erfindungsgemäß ergänzte Spaltdichtungsanordnung 41 werden später anhand der Figuren 2 - 4 näher erläutert.

Die Faserband-Auflösewalze 12 wird vorzugsweise über einen ebenfalls maschinenlangen Tangentialriemen 13 beaufschlagt, während der Faserband-Einzugszylinder 14 beispielsweise über einen Antrieb 15 einzelmotorisch angetrieben wird.
Der Antrieb 15 des Faserband-Einzugszylinders 14, beispielsweise ein Schrittmotor, ist dabei über eine Steuerleitung 16 an eine arbeitsstelleneigene Steuerrichtung 9, einen so genannten Arbeitsstellenrechner, angeschlossen, der seinerseits über ein Bussystem 50 mit der Zentralsteuereinheit 45 der Offenend- Rotorspinnmaschine 1 verbunden ist.

Des Weiteren verfügen die Arbeitsstellen 2 jeweils über eine Fadenabzugseinrichtung 18, deren Antrieb 19 über eine Steuerleitung 20 ebenfalls mit der Steuerrichtung 9 in Verbindung steht.

Wie in Fig. 1 weiter angedeutet, ist die Steuereinrichtung 9, die unter anderem den Antrieb der Hebeeinrichtung 7 zum Abheben der Kreuzspule, den Antrieb 16 der Fadenabzugseinrichtung 18 sowie den Antrieb 15 des Faserbandeinzugszylinders 14 steuert, außerdem über eine Signalleitung 29 mit einem Schaltelement 27 verbunden.
Das heißt, die Steuereinrichtung 9 kann über das Schaltelement 27 manuell aktiviert werden.

In Fadenlaufrichtung hinter der Fadenabzugseinrichtung 18 ist eine Fadenspeicherdüse 37 angeordnet, die über eine Pneumatikleitung 38 an einen Unterdruckkanal 32 des Unterdrucksystems der Offenend-Rotorspinnmaschine 1 angeschlossen ist, das außerdem noch über einen Hauptunterdruckkanal 31 verfügt.
In die Pneumatikleitung 38 ist dabei ein definiert ansteuerbares Sperrmittel 35 eingeschaltet, das von der Steuereinrichtung 9 via Signalleitung 36 betätigbar ist.

Jede der Arbeitsstellen 2 verfügt des Weiteren über eine Saugdüse 25, die ebenfalls an den Unterdruckkanal 32 angeschlossen, während des normalen Spinnprozesses aber verschlossen ist. Die Saugdüsen 25 können bei Bedarf, insbesondere zum Entsorgen von Fadenmaterial, gezielt geöffnet werden. Das heißt, bei einem manuellen Kreuzspulen-/Leerhülsenwechsel kann über die geöffnete Saugdüse 25 der betreffenden Arbeitsstelle 2 der während des Kreuzspulen-/Leerhülsenwechsels der von der Spinnvorrichtung 3 jeweils fortlaufend weiter produzierte Faden 30 bis zum Wiederanlegen des Fadens 30 an eine im Spulenrahmen 21 gehalterte Leerhülse sicher entsorgt werden.

Die Fig.2 zeigt in Schnittdarstellung den Stand der Technik, wie er im Zusammenhang mit Offenend-Spinnvorrichtungen bekannt ist, deren Spinnrotor in Wälzlagereinrichtungen gelagert ist.
Wie dargestellt, ist der Rotorschaft 47 des Spinnrotors 4, dessen Spinntasse während des Spinnbetriebes mit relativ hoher Drehzahl in einem mit Unterdruck beaufschlagbaren Rotorgehäuse 6 umläuft, in Wälzlagereinrichtungen 5A, 5B abgestützt, die ihrerseits in einem Lagergehäuse 8 angeordnet sind, das an das Rotorgehäuse 6 angeschlossen ist.
Wie in Fig.2 dargestellt, ist das Rotorgehäuse 6 über eine Pneumatikleitung 49 mit einer Unterdruckquelle 51 verbunden, die den während des Spinnbetriebes im Rotorgehäuse 6 benötigten Spinnunterdruck bereitstellt. Das Rotorgehäuse 9 ist während des Spinnbetriebes zum Beispiel durch einen Schwenkdeckel 52 verschlossen, der, wie üblich, einen so genannten Kanalplattenadapter 53 mit einer Fadenabzugsdüse 54 aufweist. An das Rotorgehäuse 6 angeschlossen, bzw. mit dem Rotorgehäuse 6 eine Baueinheit bildend, ist ein Lagergehäuse 8 für die Wälzlagereinrichtungen 5, vorzugsweise für eine vordere Wälzlagereinrichtung 5A und eine hintere Wälzlagereinrichtung 5B.
Das buchsenartige, stählerne Lagergehäuse 8 weist zwei beabstandet angeordnete Außenlaufbahnen 61 für Wälzlagerkörper 55 auf und ist wenigstens im Bereich dieser Außenlaufbahnen 61 gehärtet. Die zugehörigen Wälzlagerkörper 55, beispielsweise gehärtete Stahlkugeln, stützen sich im Montagezustand außerdem in gegenüberliegenden Innenlaufbahnen 56 einer stählernen Welle ab, die einen Rotorschaft 47 bildet. Die Wälzlagerkörper 55 sind dabei in so genannten Käfigen 57 rotierbar gehaltert sowie durch ein Schmiermittel, Schmierfett oder Öl, geschmiert.

Auch der Rotorschaft 47 ist wenigstens im Bereich ihrer Innenlaufbahnen 56 gehärtet und außerdem endseitig mit einem Antriebswirtel 40 ausgestattet, der von einem maschinenlangen Antriebsriemen 39 beaufschlagt wird.
Auf der dem Antriebswirtel 40 gegenüberliegenden Seite ist auf dem Rotorschaft 47 die Rotortasse eines Spinnrotors 4 festgelegt, die während des Spinnbetriebs mit relativ hoher Drehzahl in dem unterdruckbeaufschlagbaren Rotorgehäuse 6 umläuft.
Das heißt, der während des Spinnbetriebes durch den Antriebsriemen 39 rotierte Rotorschaft 47 reicht durch eine entsprechende Eintrittsöffnung in das unterdruckbeaufschlagte Rotorgehäuse 6.

Wie in den Figuren 2 und 2A weiter dargestellt, sind die Wälzlagereinrichtungen 5A und 5B nach außen außerdem jeweils durch beispielsweise labyrinthartige Spaltdichtungsanordnungen 41 abgedeckt, die dafür sorgen, dass das Schmiermittel im Bereich der Wälzlagerkörper 55 gehalten wird sowie verhindern sollen, das Schmutz in,die Wälzlagereinrichtungen 5A, 5B eindringt.

Die Spaltdichtungsanordnungen 41 sind beispielsweise als Labyrinthdichtungen aufgebaut und bestehen jeweils, wie zum Beispiel aus Fig. 2A ersichtlich, vorzugsweise aus mehreren verschiedenen Bauteilen.
Das am weitesten innenliegende Bauteil einer solchen Spaltdichtungsanordnung 41 ist meistens eine geprägte Dichtscheibe 58, die vorzugsweise einen Lagerraum für ein Schmiermittel bildet. An dieser geprägten Dichtscheibe 58 liegt in der Regel eine glatte, ringförmige, bewegliche Dichtscheibe 59 an. Zwischen den Dichtscheiben 58, 59 ist ein O-Ring 60 positioniert. An die glatte, ringförmige Dichtscheibe 59 schließt sich eine weitere geprägte Dichtscheibe an, die oft auch als Abdeckscheibe 43 bezeichnet wird. Die verschiedenen Bauteile derartiger Spaltdichtungsanordnungen 41 werden insgesamt durch einen Sprengring 62 fixiert, der in eine entsprechende Aussparung des Lagergehäuses 8 eingespannt ist.

Derartige, an sich bewährte Spaltdichtungsanordnungen 41, deren Dichtwirkung auf strömungstechnischen Effekten beruht, arbeiten bei dynamischen Lagerzuständen des Spinnrotors in der Regel recht gut, das heißt, bei dynamischen Lagerzuständen des Spinnrotors ist eine recht wirksame Abdichtung der Wälzlagereinrichtungen 5A, 5B gegenüber der Umgebungsatmosphäre gegeben.

Bei bestimmten Betriebszuständen, wie sie zum Beispiel bei einem Fadenbruch oder insbesondere beim so genannten Massenanspinnen von Offenend-Spinnvorrichtungen gegeben sind, das heißt, bei Betriebszuständen, bei denen der Rotorschaft noch nicht rotiert, das Rotorgehäuse aber dennoch bereits mit Unterdruck beaufschlagt ist, ergo statische Lagerzustände der Spinnrotoren vorliegen, besteht bei diesen Spaltdichtungsanordnungen 41 allerdings stets die Gefahr, dass durch die Spaltdichtungsanordnung 41 hindurch, von außen Schmutzpartikel und/oder Fasermaterial in die Wälzlagereinrichtungen 5A, 5B eingesaugt werden und sich dieses Material im Bereich der Wälzlagereinrichtungen 5A, 5B ablagert.

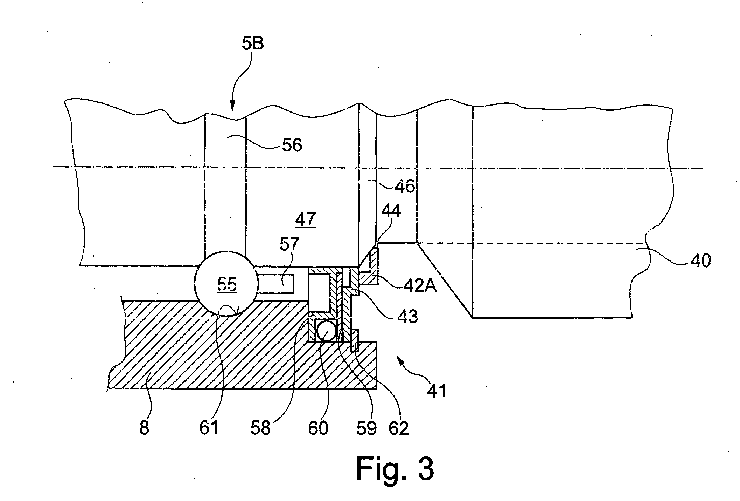

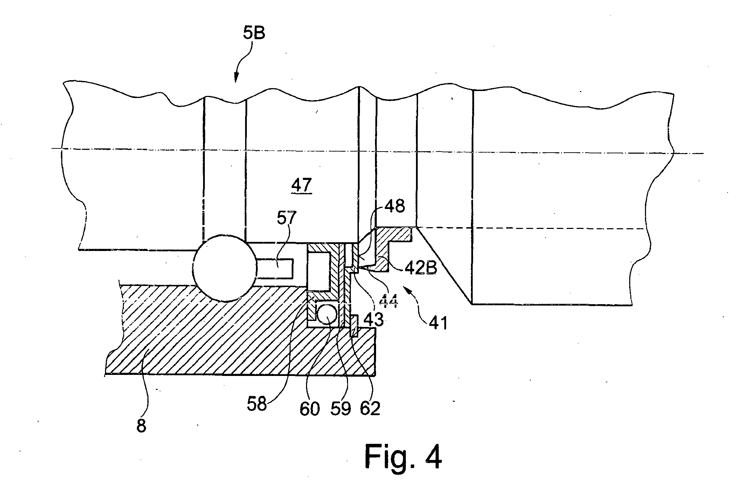

Die bekannten Spaltdichtungsanordnungen 41 wurden daher erfindungsgemäß, wie in den Figuren 3 und 4 dargestellt, modifiziert. Das heißt, die bekannten Spaltdichtungsanordnungen 41 wurden jeweils mit einem elastischen Dichtungselement 42A.bzw. 42B ergänzt, das sicherstellt, dass auch bei statischen Lagerzuständen der Spinnrotoren jeweils eine zuverlässige Dichtwirkung im Bereich der Spaltdichtungsanordnungen 41 gegeben ist.

Wie in Fig.3 dargestellt, ist in einer ersten Ausführungsform vorgesehen, dass zum Beispiel an der äußeren Abdeckschelbe 43 der hinteren Spaltdichtungsanordnung 41 ein elastisches Dichtungselement 42A angeordnet und dabei so ausgebildet ist, dass es im statischen Lagerzustand des Spinnrotors 4, bei dem es durch den Unterdruck im Rotorgehäuse 6 im Sinne "ansaugen" beaufschlagt wird, mit einer Dichtlippe 44 an einer Dichtfläche 46 des Rotorschaftes 47 anliegt und dabei das Lagergehäuse 8 nahezu druckdicht gegenüber der Umgebungsatmosphäre verschließt.

Sobald allerdings der Spinnrotor 4 einer Spinnstelle 2 gestartet wird, das heißt, sobald der Rotorschaft 47 zu rotieren beginnt, sorgen die im Bereich der Spaltdichtungsanordnung 41 auftretenden strömungstechnischen Effekte automatisch dafür, dass die Dichtlippe 44 des Dichtungselements 42A von der Dichtfläche 46 abgehoben und dadurch nahezu verschleißfrei gehalten wird.

Da die Spaltdichtungsanordnungen 41 im dynamischen Lagerzustand des Spinnrotors 4 als berührungsfreie Wellendichtungen arbeiten, bilden solche erfindungsgemäß durch ein elastisches Dichtungselement 42A ergänzten Spaltdichtungsanordnungen 41 jetzt nahezu verschleißfrei arbeitende Dichtungseinrichtungen, die bei allen Betriebszuständen des Spinnrotors, das heißt, sowohl bei dynamischen als auch bei statischen Lagerzuständen optimal arbeiten.

Die Fig.4 zeigt eine alternative Ausführungsform eines elastischen Dichtungselements, das eine zuverlässige Abdichtung eines Lagergehäuses 8 bei statischen Lagerzuständen gewährleistet.
Das elastische Dichtungselement 42B ist hier direkt auf dem Rotorschaft 47 positioniert und rotiert während des Spinnbetriebes mit dem Rotorschaft.

Auch das elastische Dichtungselement 42B ist so ausgebildet und angeordnet, dass es im statischen Lagerzustand des Spinnrotors, unterdruckbeaufschlagt, mit einer Dichtlippe 44 an einer Dichtfläche 48 anliegt, die in diesem Fall durch die äußere Abdeckscheibe 43 der Spaltdichtungsanordnung 41 gebildet wird.

Wie beim Ausführungsbeispiel gemäß Fig.3 sorgen auch hier, sobald der Spinnrotor 4 der Spinnstelle 2 gestartet wird und der Rotorschaft 47 zu rotieren beginnt, strömungstechnische Effekte im Bereich der Spaltdichtungsanordnungen 41 automatisch dafür, dass die Dichtlippe 44 des Dichtungselements 42B von der Dichtfläche 48 abgehoben wird.

Die Erfindung soll allerdings ausdrücklich nicht auf die beiden vorstehend beschriebenen Ausführungsformen eines elastischen Dichtungselements beschränkt sein. Es sind durchaus weitere, vergleichbare Ausführungsformen denkbar.
Erfindungswesentlich ist, dass das elastische Dichtungselement eine an sich bekannte Spaltdichtungsanordnung dahingehend komplettiert, dass bei einer derartigen Spaltdichtungsanordnung neben der bislang üblichen Dichtwirkung bei dynamischen Lagerzuständen des Spinnrotors jetzt auch eine Dichtwirkung bei statischen Lagerzuständen des Spinnrotors gegeben ist.

## Patentansprüche

1. Offenend-Spinnvorrichtung mit einem Spinnrotor, der während des Spinnbetriebes mit hoher Drehzahl in einem mit Urnterdruck beaufschlagten Rotorgehäuse umläuft, an das ein Lagergehäuse angeschlossen ist, welches eine Spinnrotorlagerung aufweist, wobei die Spinnrotorlagerung über geschmierte, vordere und hintere Wälzlagereinrichtungen verfügt, in denen der Spinnrotor rotierbar gelagert ist und die Wälzlagereinrichtungen nach außen durch Spaltdichtungsanordnungen abgedeckt sind, die im dynamischen Lagerzustand die Wälzlagereinrichtungen abdichten,
**dadurch gekennzeichnet,**
**dass** wenigstens im Bereich der Spaltdichtungsanordnung (41) der hinteren Wälzlagereinrichtung (5B) ein zusätzliches, elastisches Dichtungselement (42A, 42B) angeordnet ist, das im statischen Lagerzustand mit einer zugehörigen Dichtfläche (46, 48) korrespondiert und dadurch sicherstellt, dass die Wälzlagereinrichtungen (5A, 5B) auch im statischen Lagerzustand des Spinnrotors (4) gegenüber der Umgebungsatmosphäre abgedichtet sind.

2. Offenend-Spinnvorrichtung gemäß Anspruch 1, **dadurch gekennzeichnet**, und das zusätzliche elastische Dichtungselement (42A) an einer äußeren Abdeckscheibe (43) der Spaltdichtungsanordnung (41) angeordnet ist.

3. Offenend-Spinnvorrichtung gemäß Anspruch 2, **dadurch gekennzeichnet, dass** das zusätzliche elastische Dichtungselement (42A) an die äußere Abdeckscheibe (43) der Spaltdichtungsanordnung (41) angeklebt ist.

4. Offenend-Spinnvorrichtung gemäß Anspruch 2, **dadurch gekennzeichnet, dass** das zusätzliche elastische Dichtungselement (42A) durch Vulkanisieren an der äußeren Abdeckscheibe (43) der Spaltdichtungsanordnung (41) festgelegt ist.

5. Offenend-Spinnvorrichtung gemäß Anspruch 2, **dadurch gekennzeichnet, dass** das zusätzliche elastische Dichtungselement (42A) eine Dichtlippe (44) aufweist, die im statischen Lagerzustand mit einer Dichtfläche (46) am Rotorschaft (47) des Spinnrotors (4) korrespondiert.

6. Offenend-Spinnvorrichtung gemäß Anspruch 1, **dadurch gekennzeichnet, dass** das zusätzliche elastische Dichtelement (42B) als separates, am Rotorschaft (47) festlegbares Bauteil ausgebildet ist, das im statischen Lagerzustand mit einer Dichtfläche (48) an der äußeren Abdeckscheibe (43) der Spaltdichtungsanordnung (41) korrespondiert.

7. Offenend-Spinnvorrichtung gemäß Anspruch 1, **dadurch gekennzeichnet, dass** die Spaltdichtungsanordnung (41) als Labyrinthdichtung ausgebildet ist.

8. Dichtungselement einer Spinnrotorlagerung mit geschmierten vorderen und hinteren Wälzlagereinrichtungen, die nach außen durch Spaltdichtungsanordnungen abgedeckt sind, die im dynamischen Lagerzustand die Wälzlagereinrichtungen abdichten,
**dadurch gekennzeichnet,**
**dass** das Dichtungselement (42A, 42B) aus einem Befestigungsabschnitt und einem elastischen Dichtungsabschnitt besteht, der mittels des Unterdruckes im Rotorgehäuse (6) im statischen Lagerzustand des Spinnrotors (4) gegen eine korrespondierende Dichtfläche (46, 48) anlegbar ist.

9. Dichtungselement nach Anspruch 8, **dadurch gekennzeichnet, dass** das elastische Dichtelement (42A) an einer Abdeckscheibe (43) der als Labyrinthdichtung ausgebildeten Spaltdichtungsanordnung (41) angeordnet ist.

10. Dichtungselement nach Anspruch 9, **dadurch gekennzeichnet, dass** das elastische Dichtungselement (42A) eine Dichtlippe (44) aufweist, die im statischen Lagerzustand des Spinnrotors (4) mit einer Dichtfläche (46) am Rotorschaft (47) des Spinnrotors (4) korrespondiert.

11. Dichtungselement nach Anspruch 8, **dadurch gekennzeichnet, dass** das Dichtungselement (42B) als separates, am Rotorschaft (47) festgelegtes, elastisches Bauteil ausgebildet ist, das im statischen Lagerzustand des Spinnrotors (4) mit einer Dichtfläche (48) an der Abdeckscheibe (43) der Spaltdichtungsanordnung (41) korrespondiert.
